# EUROPÄISCHE PATENTANMELDUNG

(11) **EP 4 617 804 A2**
(43) Veröffentlichungstag der Anmeldung: **17.09.2025**
(21) Anmeldenummer: 25184520.2
(22) Anmeldetag: 20.06.2022
(51) Int. Cl.: G05B 19/4099

(54) **SYSTEM UND COMPUTERGESTÜTZTES VERFAHREN ZUM ADDITIVEN FERTIGEN EINES BAUTEILS**

(30) Priorität: 24.06.2021 DE 102021116385
(62) Teilanmeldung aus: 22735839.7
(71) Anmelder: KRONES AG, 93073 Neutraubling (DE)
(72) Erfinder: KARL, Johannes, 93073 Neutraubling (DE); GERLACH, Klaus, 93073 Neutraubling (DE); BALDAUF, Bernd, 93073 Neutraubling (DE)
(74) Vertreter: v. Bezold & Partner Patentanwälte - PartG mbB

(57) **Zusammenfassung**

Die Erfindung betrifft u.a. ein System (10) aufweisend eine erste Recheninfrastruktur (12) mit einem Webserver, der dazu konfiguriert ist, eine Benutzeroberfläche (20) bereitzustellen, mittels der ein Bauteil durch einen am Webserver angemeldeten Benutzer auswählbar ist, und eine zweite Recheninfrastruktur (14), die mit einer Vielzahl von additiven Fertigungsvorrichtungen (18) mehrerer lokaler Netzwerke (16) zum Betreiben der additiven Fertigungsvorrichtungen (18) verbindbar ist. Die erste Recheninfrastruktur (12) sendet Anweisungen, die eine additive Fertigungsvorrichtung (18) veranlassen, das ausgewählte Bauteil in einer Vielzahl von Schichten additiv zu fertigen, und einen Fertigeridentifikator, der eine dem angemeldeten Benutzer zugeordnete additive Fertigungsvorrichtung (18) referenziert, an die zweite Recheninfrastruktur (14). Die zweite Recheninfrastruktur (14) empfängt die Anweisungen und den Fertigeridentifikator und weist die in dem empfangenen Fertigeridentifikator referenzierte additive Fertigungsvorrichtung (18) an, das ausgewählte Bauteil gemäß den empfangenen Anweisungen additiv zu fertigen.

## Beschreibung

### Technisches Gebiet

Die Erfindung betrifft ein System und ein computergestütztes Verfahren zum additiven Fertigen eines Bauteils.

### Technischer Hintergrund

Der Einsatz von additiver Fertigung für die Vor-Ort-Versorgung von Kunden mit Ersatzteilen oder Verschleißteilen birgt das Potential, Anlagenstillstandzeiten und Lagerkosten erheblich zu verringern. Bspw. kann der Kunde direkt vor Ort ein entsprechendes Ersatzteil oder Verschleißteil für die Anlage additiv fertigen lassen, wenn das Teil benötigt wird.

Beispielsweise offenbart die DE 10 2015 006 512 A1 ein Verfahren zum Herstellen von Ersatzteilen für eine Maschine zur Herstellung von Verpackungen für rauchbare Produkte-Verpackungsmaschine mit folgenden Schritten: a) Verschlüsseln von für die Produktion des Ersatzteils erforderlichen, digitalen Produktionsdaten, b) Übermitteln der verschlüsselten Produktionsdaten von einer ersten, insbesondere dem Hersteller der Maschine zugeordneten Recheneinheit, zu einer zweiten, insbesondere dem Benutzer der Maschine zugeordneten Recheneinheit per Datenfernübertragung, vorzugsweise über ein Kommunikationsnetzwerk, etwa das Internet, c) Entschlüsseln der übermittelten, verschlüsselten Produktionsdaten, d) Herstellen des Ersatzteils mit einer dem Maschinenbenutzer zugeordneten, einen 3D-Drucker umfassenden Ersatzteilherstelleinrichtung nach Maßgabe der übermittelten Produktionsdaten.

Beispielsweise offenbart die DE 10 2019 109 655 A1 ein Verfahren zur additiven Fertigung wenigstens eines Bauteils definierter Bauteileigenschaften, umfassend die Schritte:- Bereitstellen wenigstens eines zertifizierten Datensatzes, welcher von einem Bereitsteller für einen additiven Fertigungsprozess wenigstens eines bestimmten Bauteils definierter Bauteileigenschaften zertifizierte bauteilspezifische Parameter, anlagenspezifische Parameter und prozessspezifische Parameter beinhaltet,- Anwenden wenigstens eines additiven Fertigungsprozesses zur additiven Fertigung wenigstens eines bestimmten Bauteils definierter Bauteileigenschaften auf Grundlage des wenigstens einen zertifizierten Datensatzes.

Der Erfindung liegt die Aufgabe zu Grunde, eine verbesserte Technik zur Kommunikation mit einer additiven Fertigungsvorrichtung zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein erster Aspekt der vorliegenden Offenbarung betrifft ein System aufweisend eine erste Recheninfrastruktur (z. B. Server-Recheninfrastruktur) mit einem Webserver, der dazu konfiguriert ist, eine Benutzeroberfläche bereitzustellen, mittels der ein Bauteil durch einen am Webserver angemeldeten Benutzer auswählbar ist. Das System weist eine zweite Recheninfrastruktur auf, die mit einer Vielzahl von additiven Fertigungsvorrichtungen mehrerer lokaler Netzwerke zum Betreiben der additiven Fertigungsvorrichtungen verbindbar ist. Die erste Recheninfrastruktur ist dazu konfiguriert, Anweisungen, die eine additive Fertigungsvorrichtung veranlassen, das ausgewählte Bauteil in einer Vielzahl von Schichten additiv zu fertigen, und einen Fertigeridentifikator, der eine dem angemeldeten Benutzer zugeordnete additive Fertigungsvorrichtung referenziert, an die zweite Recheninfrastruktur zu senden. Die zweite Recheninfrastruktur ist dazu konfiguriert, die Anweisungen und den Fertigeridentifikator zu empfangen und die in dem empfangenen Fertigeridentifikator referenzierte additive Fertigungsvorrichtung (z. B. eines lokalen Netzwerks) anzuweisen, das ausgewählte Bauteil gemäß den empfangenen Anweisungen additiv zu fertigen.

Vorteilhaft ermöglicht das Verfahren eine besonders effektive Kommunikation, um eine beliebige additive Fertigungsvorrichtung einer Vielzahl von möglichen additiven Fertigungsvorrichtungen mit Anweisungen zum additiven Fertigen eines bestimmten Bauteils zu versorgen. Einerseits kann hierfür lediglich eine einfache Auswahl des Bauteils von dem angemeldeten Benutzer erforderlich sein. Andererseits kann das System anschließend die komplette Kommunikation selbsttätig übernehmen, um schlussendlich das ausgewählte Bauteil mittels der gewünschten additiven Fertigungsvorrichtung herzustellen. Während die erste Recheninfrastruktur bspw. ein Kundenportal für eine Vielzahl von Kunden über die Benutzeroberfläche bereitstellen kann, kann mittels der zweiten Recheninfrastruktur bspw. eine digitale Fabrik abgebildet werden und dies für eine Vielzahl von Anlagen entsprechend der Vielzahl von lokalen Netzwerken. Damit kann eine effiziente Kommunikation in einem integrativen Ansatz ermöglicht werden, der in einem System mit Einbindung einer Vielzahl von Anlagen und deren additiven Fertigungsvorrichtungen besonders effizient und sicher funktionieren kann. Die Reduzierung der Benutzereingabe auf bspw. lediglich die Auswahl des Bauteils verringert zudem ein Risiko von Fehlbedienungen. Die in Reaktion auf die Auswahl des Bedienteils ablaufende Kommunikation kann zudem besonders gesichert ablaufen und bspw. sicherstellen, dass in dem jeweiligen lokalen Netzwerk nur mit der additiven Fertigungsvorrichtung kommuniziert wird, sodass bspw. auch kein Sicherheitsrisiko für andere Netzwerkkomponenten des lokalen Netzwerkes existieren. Besonders vorteilhaft ist das System in Umgebungen einsetzbar, bei der ein Anlagenbetreiber eine additive Fertigungsvorrichtung zum Herstellen von Ersatzteilen oder Verschleißteilen für die Anlage einsetzt, wobei diese Ersatzteile oder Verschleißteile über die erste, dem Hersteller der Anlage zugeordnete Recheninfrastruktur verwaltet werden können, und wobei die erste Recheninfrastruktur mit der zweiten Recheninfrastruktur, die dem Hersteller der additiven Fertigungsvorrichtung zugeordnet ist, die Herstellung des Ersatzteils oder Verschleißteils abstimmt. Die nachfolgend beschriebenen Ausführungsbeispiele können eine besonders wirkungsvolle Ausnutzung der beschriebenen Vorteile ermöglichen.

In einem Ausführungsbeispiel weist die zweite Recheninfrastruktur einen Datenspeicher, vorzugsweise Cloud-Datenspeicher, auf, und die zweite Recheninfrastruktur ist dazu konfiguriert, der ersten Recheninfrastruktur eine Adresse, vorzugweise URL-Adresse, des Datenspeichers zu senden. Die erste Recheninfrastruktur ist dazu konfiguriert, die gesendete Adresse zu empfangen und die Anweisungen an die empfangene Adresse des Datenspeichers zu senden.

In einem weiteren Ausführungsbeispiel ist die zweite Recheninfrastruktur dazu konfiguriert, die Adresse des Datenspeichers an die in dem Fertigeridentifikator referenzierte additive Fertigungsvorrichtung zu senden, vorzugsweise nachdem die erste Recheninfrastruktur die Anweisungen an die Adresse des Datenspeichers gesendet hat.

In einem weiteren Ausführungsbeispiel ist die zweite Recheninfrastruktur dazu konfiguriert, die in dem Fertigeridentifikator angegebene additive Fertigungsvorrichtung anzuweisen, die Anweisungen von der gesendeten Adresse zu laden (z. B. nachdem die erste Recheninfrastruktur die Anweisungen an die Adresse des Datenspeichers gesendet hat).

In einem weiteren Ausführungsbeispiel ist die zweite Recheninfrastruktur dazu konfiguriert, die in dem Fertigeridentifikator referenzierte additive Fertigungsvorrichtung anzuweisen, das ausgewählte Bauteil gemäß den Anweisungen additiv zu fertigen, nachdem diese die Anweisungen von der gesendeten Adresse geladen hat.

In einer Ausführungsform ist die erste Recheninfrastruktur dazu konfiguriert, in Reaktion auf ein Auswählen des Bauteils durch einen am Webserver angemeldeten Benutzer eine Anfrage an die zweite Recheninfrastruktur zu senden. Die zweite Recheninfrastruktur ist dazu konfiguriert, in Reaktion auf die Anfrage einen Auftragsidentifikator zum Referenzieren eines Fertigungsauftrags zum additiven Fertigen des ausgewählten Bauteils zu der ersten Recheninfrastruktur zu senden.

In einer weiteren Ausführungsform ist die zweite Recheninfrastruktur dazu konfiguriert, die Adresse zusammen mit dem Auftragsidentifikator an die erste Recheninfrastruktur zu senden.

In einer Ausführungsvariante ist die dem angemeldeten Benutzer zugeordnete additive Fertigungsvorrichtung durch einen Datensatz, der in der ersten Recheninfrastruktur (12) gespeichert ist (und z. B. von einem Administrator angelegt wurde), vorgegeben und/der mittels der Benutzeroberfläche durch den angemeldeten Benutzer auswählbar, angebbar und/oder änderbar.

In einer weiteren Ausführungsvariante ist mittels der Benutzerschnittstelle das Bauteil durch den am Webserver angemeldeten Benutzer aus einer Gruppe von Bauteilen auswählbar, wobei in einem Datenspeicher der ersten Recheninfrastruktur für jedes auswählbare Bauteil der Gruppe Anweisungen, die eine additive Fertigungsvorrichtung veranlassen, das jeweilige Bauteil in einer Vielzahl von Schichten additiv zu fertigen, gespeichert sind.

In einem Ausführungsbeispiel ist die zweite Recheninfrastruktur dazu konfiguriert, jeweils über ein virtuelles privates Netzwerk (VPN) mit der Vielzahl von additiven Fertigungsvorrichtungen zu kommunizieren, vorzugsweise nur jeweils ausschließlich mit der Vielzahl von additiven Fertigungsvorrichtungen innerhalb der mehreren lokalen Netzwerke.

In einem weiteren Ausführungsbeispiel ist die erste Recheninfrastruktur dazu konfiguriert, sich an der zweiten Recheninfrastruktur zu authentisieren, und die zweite Recheninfrastruktur ist dazu konfiguriert, die sich authentisierende erste Recheninfrastruktur zu authentifizieren, vorzugsweise mittels eines Zugangs-Tokens.

In einem weiteren Ausführungsbeispiel ist die zweite Recheninfrastruktur dazu konfiguriert, einen Ausführungsstatus, der einen Status einer additiven Fertigung des ausgewählten Bauteils angibt, von der im Fertigungsidentifikator referenzierten additiven Fertigungsvorrichtung zu empfangen und den empfangenen Ausführungsstatus an die erste Recheninfrastruktur zu senden.

In einem weiteren Ausführungsbeispiel ist die erste Recheninfrastruktur dazu konfiguriert, den von der zweiten Recheninfrastruktur gesendeten Ausführungsstatus zu empfangen und ein Zugriffsrecht, mit dem ein Auswählen des Bauteils für den angemeldeten Benutzer freigegeben wird, abhängig von dem empfangenen Ausführungsstatus anzupassen.

In einem weiteren Ausführungsbeispiel ist mittels der Benutzeroberfläche durch den am Webserver angemeldeten Benutzer ein Zugriffsrecht, mit dem ein Auswählen des Bauteils freigegeben wird, veränderbar.

In einem Ausführungsbeispiel ist die erste Recheninfrastruktur einem Hersteller einer Anlage, vorzugsweise Produktionsanlage, besonders bevorzugt Behälterbehandlungsanlage, zugeordnet, und/oder die zweite Recheninfrastruktur ist einem Hersteller der additiven Fertigungsvorrichtung (z. B. der im Fertigungsidentifikator referenzierten additiven Fertigungsvorrichtung) zugeordnet. Optional kann die additive Fertigungsvorrichtung (z. B. die im Fertigungsidentifikator referenzierte additive Fertigungsvorrichtung) in einer Anlage des Herstellers, die der ersten Recheninfrastruktur zugeordnet ist, als Verschleißteil- und/oder Ersatzteillieferant angeordnet bzw. betreibbar sein.

In einem weiteren Ausführungsbeispiel ist das additiv zu fertigende Bauteil ein Ersatzteil oder ein Verschleißteil einer Behälterbehandlungsanlage zum Behandeln von Behältern, vorzugsweise ein Formatteil, ein Behälterführungsgeländer, eine Behälterführung, ein Behälterhalter oder eine Behälterklammer.

Es ist möglich, dass das System eine Anlage, vorzugsweise Produktionsanlage, besonders bevorzugt Behälterbehandlungsanlage, aufweist. Optional kann die im Fertigungsidentifikator referenzierte additive Fertigungsvorrichtung in der Anlage angeordnet bzw. betreibbar sein, z. B. als ein Verschleißteil- und/oder Ersatzteillieferant für die Anlage.

Beispielsweise kann die Behälterbehandlungsanlage zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel, ausgeführt sein.

Beispielsweise können die Behälter als Flaschen, Dosen, Kanister, Kartons, Flakons usw. ausgeführt sein.

Ein weiterer Aspekt der vorliegenden Offenbarung betrifft ein computergestütztes Verfahren zum additiven Fertigen eines Bauteils, vorzugsweise einer Behälterbehandlungsanlage. Das Verfahren weist ein Bereitstellen einer ersten Recheninfrastruktur (z. B. Server-Recheninfrastruktur) mit einem Webserver, der eine Benutzeroberfläche bereitstellt, auf. Das Verfahren weist ein Bereitstellen einer zweiten Recheninfrastruktur (z. B. Server-Recheninfrastruktur), die mit einer Vielzahl von additiven Fertigungsvorrichtungen mehrerer lokaler Netzwerke zum Betreiben der additiven Fertigungsvorrichtungen verbindbar ist, auf. Das Verfahren weist ein Empfangen einer Auswahl eines Bauteils, das mittels der Benutzeroberfläche von einem am Webserver angemeldeten Benutzer ausgewählt wurde, mittels der ersten Recheninfrastruktur auf. Das Verfahren weist ein Senden von Anweisungen, die eine additive Fertigungsvorrichtung veranlassen, das ausgewählte Bauteil in einer Vielzahl von Schichten additiv zu fertigen, von der ersten Recheninfrastruktur an die zweite Recheninfrastruktur auf. Das Verfahren weist ein Senden eines Fertigeridentifikators, der eine dem angemeldeten Benutzer zugeordnete additive Fertigungsvorrichtung referenziert, von der ersten Recheninfrastruktur an die zweite Recheninfrastruktur auf. Das Verfahren weist ein Empfangen der gesendeten Anweisungen durch die zweite Recheninfrastruktur auf. Das Verfahren weist ein Empfangen des gesendeten Fertigeridentifikators durch die zweite Recheninfrastruktur auf. Das Verfahren weist ein Anweisen der in dem empfangenen Fertigeridentifikator referenzierten additiven Fertigungsvorrichtung, das ausgewählte Bauteil gemäß den empfangenen Anweisungen additiv zu fertigen, mittels der zweiten Recheninfrastruktur auf. Vorteilhaft kann das Verfahren die gleichen Vorteile erzielen, die bereits bezüglich des Systems beschrieben wurden.

Vorzugsweise kann das Verfahren das hierin offenbarte System verwenden.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung eines Systems gemäß einem Ausführungsbeispiel der vorliegenden Offenbarung; und
- Figur 2: eine schematische Darstellung einer Kommunikationsstrategie zwischen zwei Recheninfrastrukturen und einer additiven Fertigungsvorrichtung gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

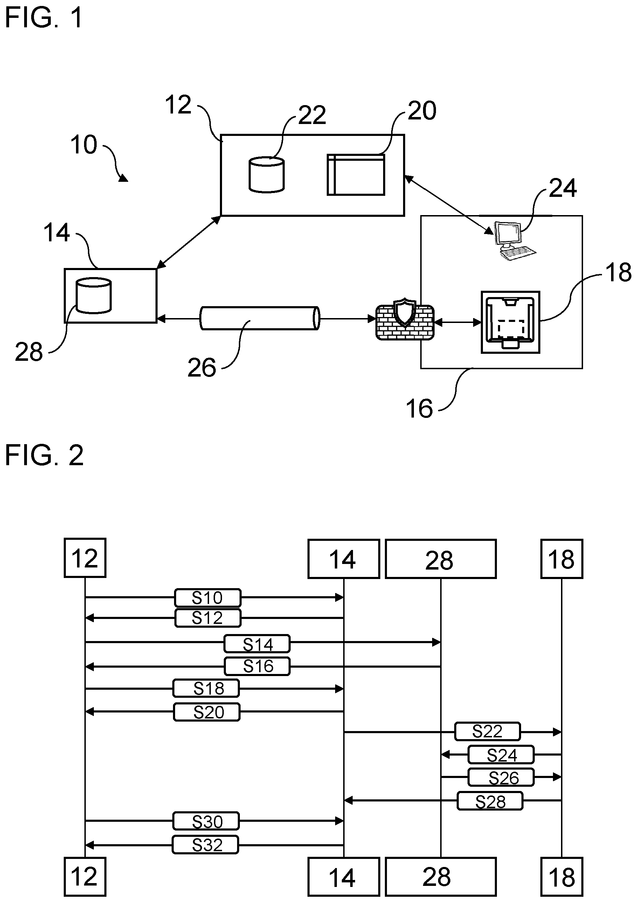

Die Figur 1 zeigt ein System 10. Das System 10 weist eine erste Recheninfrastruktur 12 und eine zweite Recheninfrastruktur 14 auf. Ferner ist ein lokales Netzwerk 16 mit einer additiven Fertigungsvorrichtung 18 umfasst.

Die erste Recheninfrastruktur 12, die zweite Recheninfrastruktur 14 und das lokale Netzwerk 16 sind vorzugsweise separat voneinander ausgebildet und optional räumlich voneinander getrennt.

Das lokale Netzwerk 16 kann stellvertretend für eine Vielzahl von lokalen Netzwerken 16 stehen, wobei aus Übersichtsgründen nur ein lokales Netzwerk 16 in Figur 1 schematisch dargestellt ist. Je nach Bildung der Systemgrenze des Systems 10 kann das lokale Netzwerk 16 im System 10 umfasst sein oder mit dem System 10 verbunden sein.

Die erste Recheninfrastruktur 12 kann mit der zweiten Recheninfrastruktur 14, (z. B. nur) über die zweite Recheninfrastruktur 14 mit der additiven Fertigungsvorrichtung 18 und mit einem Computer 24 kommunizieren.

Die erste Recheninfrastruktur 12 weist einen Webserver mit einer Benutzeroberfläche 20 auf. Die erste Recheninfrastruktur 12 kann einen Datenspeicher 22 aufweisen.

Ein Benutzer kann sich mittels des Computers 24 über die Benutzeroberfläche 20 an dem Webserver anmelden, z. B. passwortgeschützt. Der Computer 24 kann bspw. in dem lokalen Netzwerk 16 umfasst sein, oder extern von dem lokalen Netzwerk 16 angeordnet sein. Der Computer 24 ist bevorzugt ein Personal Computer (PC). Der Computer 24 kann als eine Benutzerschnittstelle dienen, mit der der Benutzer über die Benutzeroberfläche 20 des Webservers mit der ersten Recheninfrastruktur 12 kommunizieren kann.

Über die Benutzeroberfläche 20 kann der am Webserver angemeldete Benutzer ein Bauteil auswählen, das additiv gefertigt werden soll. Im Einzelnen kann der Bediener bspw. eine grafische und/oder textuelle Repräsentation des Bauteils über die Benutzeroberfläche 20 auswählen. Die grafische und/oder textuelle Repräsentation des Bauteils kann in dem Datenspeicher 22 gespeichert sein.

Es ist möglich, dass der Benutzer das Bauteil aus einer Gruppe von Bauteilen auswählen kann. Für das Bauteil und ggf. die anderen Bauteile der Gruppe können in dem Datenspeicher 22 jeweils Anweisungen gespeichert sein, die eine additive Fertigungsvorrichtung (z. B. die additive Fertigungsvorrichtung 18) veranlassen, das jeweilige Bauteil in einer Vielzahl von Schichten additiv zu fertigen.

Die Anweisungen können von der ersten Recheninfrastruktur 12 zu der zweiten Recheninfrastruktur 14 gesendet werden.

Es ist auch möglich, dass die erste Recheninfrastruktur 12 dem Benutzer über die Benutzeroberfläche 20 einen Vorschlag für ein oder mehrere auswählbare Bauteile unterbreitet. Die erste Recheninfrastruktur 12 kann den Vorschlag bspw. basierend auf der Gruppe von Bauteilen, basierend auf einem Benutzerprofil des Benutzers und/oder basierend auf früheren Nutzerinteraktionen des Benutzers mit der Benutzeroberfläche 20 bzw. der ersten Recheninfrastruktur 12 erstellen. Das Benutzerprofil und/oder eine Information bezüglich der früheren Nutzerinteraktionen kann in dem Datenspeicher 22 gespeichert sein.

Besonders bevorzugt handelt es sich bei dem Bauteil und ggf. bei der Gruppe von Bauteilen um ein Ersatzteil oder ein Verschleißteil einer Behälterbehandlungsanlage zum Behandeln von Behältern. Vorzugsweise kann das Bauteil bspw. ein Formatteil (bzw. Garniturteil), das an ein Behälterformat mehrerer unterschiedlicher Behälterformate, mit denen die Behälterbehandlungsanlage betreibbar ist, angepasst ist (z. B. bezüglich einer Behälterform, einer Behältergröße und/oder eines Behälterdurchmessers). Alternativ kann das Bauteil bspw. ein Behälterführungsgeländer, eine Behälterführung, ein Behälterhalter oder eine Behälterklammer sein. Es ist allerdings auch möglich, dass das Bauteil ein Ersatzteil oder Verschleißteil einer anderen Art von (z. B. Produktions-) Anlage ist.

Die additive Fertigungsvorrichtung 18 ist dem Benutzer zugeordnet. Die Zuordnung kann in Form eines Datensatzes vorgegeben und bspw. im Datenspeicher 22 gespeichert sein. Der Datensatz kann einen Fertigeridentifikator aufweisen, mit dem sich die additive Fertigungsvorrichtung 18 eindeutig identifizieren lässt. Die Zuordnung kann bspw. von einem Administrator der ersten Recheninfrastruktur 12 vorgegeben sein. Alternativ oder zusätzlich ist es möglich, dass der Benutzer bspw. mittels der Benutzeroberfläche 20 die additive Fertigungsvorrichtung 18 zum Fertigen des ausgewählten oder noch auszuwählenden Bauteils auswählt, angibt und/oder ändert. Die erste Recheninfrastruktur 12 kann den Fertigeridentifikator an die zweite Recheninfrastruktur 14 senden.

Die zweite Recheninfrastruktur 14 kann mit der ersten Recheninfrastruktur 12 und mit der Vielzahl von lokalen Netzwerken mit jeweils mindestens einer additiven Fertigungsvorrichtung, z. B. dem lokalen Netzwerk 16 und der additiven Fertigungsvorrichtung 18, kommunizieren. Es ist möglich, dass an die zweite Recheninfrastruktur 14 übermittelte und/oder von der zweite Recheninfrastruktur 14 empfangene Informationen während der Übertragung und im Speicher verschlüsselt sind. Die Kommunikation kann bspw. sichere HTFPS-Verbindungen mit 4095-Bit-REA-Verschlüsselung nach Industriestandard verwenden.

Zum Kommunizieren mit der ersten Recheninfrastruktur 12 kann sich die erste Recheninfrastruktur 12 an der zweiten Recheninfrastruktur 14 authentisieren, z. B. mit entsprechenden Zugangsdaten, einem Schlüssel usw. Die zweite Recheninfrastruktur 14 kann die sich authentisierende erste Recheninfrastruktur 12 authentifizieren. Die zweite Recheninfrastruktur 14 kann bspw. einen Zugangs-Token (Access-Token) oder bspw. Job-Instanz (UUID) zu der ersten Recheninfrastruktur 12 senden, wenn die Authentifizierung erfolgreich war.

Zum Kommunizieren mit dem lokalen Netzwerk 16 bzw. den lokalen Netzwerken kann die zweite Recheninfrastruktur 14 ein virtuelles privates Netzwerk (VPN) 26 bzw. einen VPN-Tunnel verwenden. Über das virtuelle private Netzwerk 26 kann bspw. eine gesicherte https-Verbindung zwischen der zweiten Recheninfrastruktur 14 und der additiven Fertigungsvorrichtung 18 hergestellt werden. Das lokale Netzwerk 16 kann eine Firewall aufweisen, die bspw. nur einen vorbestimmten Port für die Kommunikation exklusiv mit der additiven Fertigungsvorrichtung 18 bereitstellt. Die exklusive Kommunikationsverbindung kann ausschließen, dass die zweite Recheninfrastruktur 14 mit anderen Netzwerkkomponenten des lokalen Netzwerks 16 abgesehen von der additiven Fertigungsvorrichtung 18 kommunizieren kann.

Die zweite Recheninfrastruktur 14 ist bevorzugt eine Cloud-Recheninfrastruktur. Die zweite Recheninfrastruktur 12 kann die additive Fertigungsvorrichtung 18 zum additiven Fertigen des Bauteils gemäß den empfangenen Anweisungen betreiben.

Die zweite Recheninfrastruktur 14 kann einen Datenspeicher 28, vorzugsweise einen Cloud-Datenspeicher, aufweisen. Im Datenspeicher 28 können bspw. die von der ersten Recheninfrastruktur 14 empfangenen Anweisungen zum additiven Fertigen des Bauteils gespeichert werden.

Das lokale Netzwerk 16 kann eine Vielzahl von Netzwerkkomponente aufweisen, u.a. die additive Fertigungsvorrichtung 18 und ggf. den Computer 24. Das lokale Netzwerk 16 ist bevorzugt ein lokales Netzwerk einer Behälterbehandlungsanlage. Es ist auch möglich, dass das lokale Netzwerk ein lokales Netzwerk einer anderen Art von (z. B. Produktions-) Anlage ist, in der mittels der additiven Fertigungsvorrichtung 18 gefertigte Bauteile als Ersatzteil der Verschleißteile eingesetzt werden können.

Die additive Fertigungsvorrichtung 18 kann aus zugeführtem (z. B. Kunststoff-) Material (z. B. in Fadenform) basierend auf den Anweisungen das ausgewählte Bauteil in einer Vielzahl von (Material-) Schichten fertigen bzw. herstellen.

Nachfolgend ist unter besonderer Bezugnahme auf die Figur 2 eine beispielhafte Kommunikation zwischen der ersten Recheninfrastruktur 12, der zweiten Recheninfrastruktur 14 und der additiven Fertigungsvorrichtung 18 zum additiven Fertigen eines Bauteils beschrieben. Es ist möglich, das Verfahren in reduzierter Form mit weniger als den Verfahrensschritten S10 bis S32 oder in erweiterter Form mit zusätzlichen Verfahrensschritten zu implementieren.

Nachdem ein Benutzer ein additiv zu fertigendes Bauteil in der Benutzeroberfläche 20 ausgewählt hat, kann die Recheninfrastruktur 12 im Schritt S10 eine Anfrage an die zweite Recheninfrastruktur 14 senden. Die zweite Recheninfrastruktur 14 kann die gesendete Anfrage empfangen. Es kann bspw. ein Auftragsidentifikator (z. B. Job-ID), mit der der Fertigungsauftrag eindeutig identifizierbar ist, angefragt werden. Es kann auch eine Adresse des Datenspeichers 28 angefragt werden. Die Anfrage kann auch eine Information bzgl. der Anweisungen zum additiven Fertigen des ausgewählten Bauteils in einer Vielzahl von Schichten aufweisen, z. B. eine Dateigröße einer Datei, die die Anweisungen aufweist.

In einem Schritt S12 kann die zweite Recheninfrastruktur 14 einen Auftragsidentifikator (z. B. Job-ID), mit der der Fertigungsauftrag eindeutig identifizierbar ist, an die erste Recheninfrastruktur 12 senden. Es kann auch eine Adresse, vorzugsweise URL-Adresse, des Datenspeichers 28, an der die Anweisungen zum additiven Fertigen abzuspeichern sind, von der zweiten Recheninfrastruktur 14 an die erste Recheninfrastruktur 12 gesendet werden. Die erste Recheninfrastruktur 12 kann den Auftragsidentifikator und/oder die Adresse empfangen.

In einem Schritt S14 kann die erste Recheninfrastruktur 12 die Anweisungen, die die additive Fertigungsvorrichtung 18 veranlassen, das ausgewählte Bauteil in einer Vielzahl von Schichten aufzubauen, zu der empfangenen Adresse zum Speichern im Datenspeicher 28 senden. Die Anweisungen können bspw. in Form einer von der additiven Fertigungsvorrichtung 18 lesbaren Datei vorliegen bzw. gesendet werden. Der Datenspeicher 28 kann die gesendeten Anweisungen empfangen.

In einem Schritt S16 kann der Datenspeicher 28 eine Bestätigung an die erste Recheninfrastruktur 12 senden, dass die Anweisungen vollständig empfangen wurden. Die Bestätigung kann ferner eine Adresse der Anweisungen auf dem Datenspeicher 28 aufweisen, von der die Anweisungen direkt abrufbar sind.

In einem Schritt S18 kann die erste Recheninfrastruktur 12 einen Fertigeridentifikator an die zweite Recheninfrastruktur 14 senden. Der Fertigeridentifikator kann diejenige additive Fertigungsvorrichtung 18 referenzieren, von der das Bauteil additiv zu fertigen ist. Der Fertigeridentifikator bzw. die jeweilige additive Fertigungsvorrichtung 18 kann bspw. dem auswählenden Benutzer zugeordnet sein oder von diesem vorgegeben werden, wie bereits erläutert wurde. Die erste Recheninfrastruktur 12 kann den Fertigeridentifikator zusammen mit dem zuvor empfangenen Auftragsidentifikator an die zweite Recheninfrastruktur 14 senden, um bspw. eine entsprechende Zuordnung für die zweite Recheninfrastruktur 14 zu ermöglichen. Die zweite Recheninfrastruktur 14 kann den Fertigeridentifikator und ggf. den Auftragsidentifikator empfangen.

In einem Schritt S20 kann die zweite Recheninfrastruktur 14 eine Statusmeldung der im Fertigeridentifikator referenzierten additiven Fertigungsvorrichtung 18 an die erste Recheninfrastruktur 12 ggf. zusammen mit dem Auftragsidentifikator senden. Die Statusmeldung kann bspw. angeben, ob die referenzierte additive Fertigungsvorrichtung 18 eingeschaltet, verfügbar, betriebsbereit und/oder mit der zweiten Recheninfrastruktur 14 verbunden ist. Die erste Recheninfrastruktur 12 kann die Statusmeldung und ggf. den Auftragsidentifikator empfangen.

In einem Schritt S22 kann die zweite Recheninfrastruktur 14 der im Fertigeridentifikator referenzierte additiven Fertigungsvorrichtung 18 die Adresse des Datenspeichers 28 zum Laden der Anweisungen senden. Die zweite Recheninfrastruktur 14 kann die im Fertigeridentifikator referenzierte additive Fertigungsvorrichtung 18 anweisen, die Anweisungen von der gesendeten Andresse zu laden. Die zweite Recheninfrastruktur 14 kann die im Fertigeridentifikator referenzierte additive Fertigungsvorrichtung 18 anweisen, das Bauteil gemäß den Anweisungen additiv zu fertigen. Die additive Fertigungsvorrichtung 18 kann die gesendeten Informationen (Adresse und ggf. Anweisung zum Laden und/oder Anweisung zum Fertigen) von der zweiten Recheninfrastruktur 14 empfangen.

In einem Schritt S24 kann die additive Fertigungsvorrichtung 18 ein Laden der Anweisungen von der empfangenen Adresse des Datenspeichers 28 starten.

In einem Schritt S26 werden die Anweisungen von dem Datenspeicher 28 an die additive Fertigungsvorrichtung 18 übertragen.

Nach dem Laden bzw. Empfangen der Anweisungen kann die additive Fertigungsvorrichtung 18 beginnen, das ausgewählte Bauteil in einer Vielzahl von Schichten additiv zu fertigen.

In einem Schritt S28 kann die additive Fertigungsvorrichtung 18 einen Ausführungsstatus bezüglich der Fertigung des Bauteils an die zweiten Recheninfrastruktur 14 senden. Bspw. kann in vorgegebenen Intervallen (z. B. in einem Bereich zwischen ca. 5 s und 360 s, vorzugsweise ca. 10 s) ein (aktuellen bzw. aktualisierten) Ausführungsstatus von der additiven Fertigungsvorrichtung 18 gesendet werden. Der Ausführungsstatus kann einen Fertigungsfortschritt bzw. einen Druckfortschritt des Bauteils angeben, z. B. als ein Prozentwert. Die zweite Recheninfrastruktur 14 kann den gesendeten Ausführungsstatus empfangen und optional an die erste Recheninfrastruktur 12 senden.

In einem Schritt S30 kann die erste Recheninfrastruktur 12 eine Statusanfrage bezüglich der im Fertigeridentifikator referenzierten additive Fertigungsvorrichtung 18 an die zweite Recheninfrastruktur 14 senden., z. B. ob das Bauteil gerade gefertigt wird, wie weit das Bauteil bereits gefertigt wurde, ob die additive Fertigung des Bauteils bereits abgeschlossen ist, oder ob ein Fehler bei der additiven Fertigung aufgetreten ist. Die zweite Recheninfrastruktur 14 kann die Statusanfrage empfangen.

In einem Schritt S32 kann die zweite Recheninfrastruktur 14 eine Statusmeldung bezüglich der additiven Fertigungsvorrichtung 18 an die erste Recheninfrastruktur 12 senden, z. B. ob das Bauteil gerade gefertigt wird, wie weit das Bauteil bereits gefertigt wurde, ob die additive Fertigung des Bauteils bereits abgeschlossen ist, oder ob ein Fehler bei der additiven Fertigung aufgetreten ist.

Die erste Recheninfrastruktur 12 kann die Statusmeldung empfangen. Informationen bezüglich der empfangenen Statusmeldung können dem Bediener bspw. über die Benutzeroberfläche 20 ausgegeben werden.

Es ist auch möglich, dass basierend auf Informationen aus der Statusmeldung ein Zugriffsrecht für den Benutzer auf eine Auswählbarkeit des Bauteils bzw. dessen Freigabe in Reaktion auf die Statusmeldung angepasst wird. Bspw. kann das Zugriffsrecht bzw. die Freigabe entzogen werden, wenn die Statusmeldung angibt, dass das Bauteil vollständig gefertigt wurde. Andererseits kann das Zugriffsrecht auch derart verändert werden, dass eine verfügbare Anzahl für eine Auswählbarkeit des Bauteils reduziert werden, z. B. um eins, wenn ein Bauteil additiv gefertigt wurde. Es ist möglich, dass der Benutzer sein Zugriffsrecht anpassen kann, z. B. die verfügbare Anzahl erhöhen kann, z. B. mittels eines Online-Bezahlsystems.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: System
- 12: erste Recheninfrastruktur
- 14: zweite Recheninfrastruktur
- 16: lokales Netzwerk
- 18: additive Fertigungsvorrichtung (z. B. 3D-Drucker)
- 20: Benutzeroberfläche
- 22: Datenspeicher
- 24: Computer
- 26: virtuelles privates Netzwerk
- 28: Datenspeicher
- S10 - S32: Verfahrensschritte

## Patentansprüche

1. System (10) aufweisend:
eine erste Recheninfrastruktur (12) mit einem Webserver, der dazu konfiguriert ist, eine Benutzeroberfläche (20) bereitzustellen, mittels der ein Bauteil durch einen am Webserver angemeldeten Benutzer auswählbar ist,
eine zweite Recheninfrastruktur (14), die mit einer Vielzahl von additiven Fertigungsvorrichtungen (18) mehrerer lokaler Netzwerke (16) zum Betreiben der additiven Fertigungsvorrichtungen (18) verbindbar ist,
wobei:
d ie erste Recheninfrastruktur (12) dazu konfiguriert ist, Anweisungen, die eine additive Fertigungsvorrichtung (18) veranlassen, das ausgewählte Bauteil in einer Vielzahl von Schichten additiv zu fertigen, und einen Fertigeridentifikator, der eine dem angemeldeten Benutzer zugeordnete additive Fertigungsvorrichtung (18) referenziert, an die zweite Recheninfrastruktur (14) zu senden, und
d ie zweite Recheninfrastruktur (14) dazu konfiguriert ist, die Anweisungen und den Fertigeridentifikator zu empfangen und die in dem empfangenen Fertigeridentifikator referenzierte additive Fertigungsvorrichtung (18) anzuweisen, das ausgewählte Bauteil gemäß den empfangenen Anweisungen additiv zu fertigen.

2. System (10) nach Anspruch 1, wobei:
die zweite Recheninfrastruktur (14) einen Datenspeicher (28), vorzugsweise Cloud-Datenspeicher, aufweist,
die zweite Recheninfrastruktur (14) dazu konfiguriert ist, der ersten Recheninfrastruktur (12) eine Adresse, vorzugweise URL-Adresse, des Datenspeichers (28) zu senden, und
die erste Recheninfrastruktur (12) dazu konfiguriert ist, die gesendete Adresse zu empfangen und die Anweisungen an die empfangene Adresse des Datenspeichers (28) zu senden.

3. System (10) nach Anspruch 2, wobei:
die zweite Recheninfrastruktur (14) dazu konfiguriert ist, die Adresse des Datenspeichers (28) an die in dem Fertigeridentifikator referenzierte additive Fertigungsvorrichtung (18) zu senden, vorzugsweise nachdem die erste Recheninfrastruktur (12) die Anweisungen an die Adresse des Datenspeichers (28) gesendet hat.

4. System (10) nach Anspruch 3, wobei:
die zweite Recheninfrastruktur (14) dazu konfiguriert ist, die in dem Fertigeridentifikator angegebene additive Fertigungsvorrichtung (18) anzuweisen, die Anweisungen von der gesendeten Adresse zu laden; und optional
die zweite Recheninfrastruktur (14) dazu konfiguriert ist, die in dem Fertigeridentifikator referenzierte additive Fertigungsvorrichtung (18) anzuweisen, das ausgewählte Bauteil gemäß den Anweisungen additiv zu fertigen, nachdem diese die Anweisungen von der gesendeten Adresse geladen hat.

5. System (10) nach einem der vorherigen Ansprüche, wobei:
die erste Recheninfrastruktur (12) dazu konfiguriert ist, in Reaktion auf ein Auswählen des Bauteils durch einen am Webserver angemeldeten Benutzer eine Anfrage an die zweite Recheninfrastruktur (14) zu senden, und
die zweite Recheninfrastruktur (14) dazu konfiguriert ist, in Reaktion auf die Anfrage einen Auftragsidentifikator zum Referenzieren eines Fertigungsauftrags zum additiven Fertigen des ausgewählten Bauteils zu der ersten Recheninfrastruktur (12) zu senden.

6. System (10) nach Anspruch 5 und einem der Ansprüche 2 bis 4, wobei:
die zweite Recheninfrastruktur (14) dazu konfiguriert ist, die Adresse zusammen mit dem Auftragsidentifikator an die erste Recheninfrastruktur (12) zu senden.

7. System (10) nach einem der vorherigen Ansprüche, wobei:
die dem angemeldeten Benutzer zugeordnete additive Fertigungsvorrichtung (18) durch einen Datensatz, der in der ersten Recheninfrastruktur (12) gespeichert ist, vorgegeben ist und/der mittels der Benutzeroberfläche (20) durch den angemeldeten Benutzer auswählbar, angebbar und/oder änderbar ist.

8. System (10) nach einem der vorherigen Ansprüche, wobei:
mittels der Benutzerschnittstelle (20) das Bauteil durch den am Webserver angemeldeten Benutzer aus einer Gruppe von Bauteilen auswählbar ist, wobei in einem Datenspeicher (22) der ersten Recheninfrastruktur (12) für jedes auswählbare Bauteil der Gruppe Anweisungen, die eine additive Fertigungsvorrichtung (18) veranlassen, das jeweilige Bauteil in einer Vielzahl von Schichten additiv zu fertigen, gespeichert sind.

9. System (10) nach einem der vorherigen Ansprüche, wobei:
die zweite Recheninfrastruktur (14) dazu konfiguriert ist, jeweils über ein virtuelles privates Netzwerk (26) mit der Vielzahl von additiven Fertigungsvorrichtungen (18) zu kommunizieren, vorzugsweise nur jeweils ausschließlich mit der Vielzahl von additiven Fertigungsvorrichtungen (18) innerhalb der mehreren lokalen Netzwerke (16); und/oder
die erste Recheninfrastruktur (12) dazu konfiguriert, sich an der zweiten Recheninfrastruktur (14) zu authentisieren, und die zweite Recheninfrastruktur (14) dazu konfiguriert ist, die sich authentisierende erste Recheninfrastruktur (12) zu authentifizieren, vorzugsweise mittels eines Zugangs-Tokens.

10. System (10) nach einem der vorherigen Ansprüche, wobei:
die zweite Recheninfrastruktur (14) dazu konfiguriert ist, einen Ausführungsstatus, der einen Status einer additiven Fertigung des ausgewählten Bauteils angibt, von der im Fertigungsidentifikator referenzierten additiven Fertigungsvorrichtung (18) zu empfangen und den empfangenen Ausführungsstatus an die erste Recheninfrastruktur (12) zu senden.

11. System (10) nach Anspruch 10, wobei:
die erste Recheninfrastruktur (12) dazu konfiguriert ist, den von der zweiten Recheninfrastruktur (14) gesendeten Ausführungsstatus zu empfangen und ein Zugriffsrecht, mit dem ein Auswählen des Bauteils für den angemeldeten Benutzer freigegeben wird, abhängig von dem empfangenen Ausführungsstatus anzupassen.

12. System (10) nach einem der vorherigen Ansprüche, wobei:
mittels der Benutzeroberfläche (20) durch den am Webserver angemeldeten Benutzer ein Zugriffsrecht, mit dem ein Auswählen des Bauteils freigegeben wird, veränderbar ist.

13. System (10) nach einem der vorherigen Ansprüche, wobei:
die erste Recheninfrastruktur (12) einem Hersteller einer Anlage, vorzugsweise Produktionsanlage, besonders bevorzugt Behälterbehandlungsanlage, zugeordnet ist; und
die zweite Recheninfrastruktur (14) einem Hersteller der additiven Fertigungsvorrichtung (18) zugeordnet ist; und optional
die additive Fertigungsvorrichtung (18) in einer Anlage des Herstellers, die der ersten Recheninfrastruktur (12) zugeordnet ist, als Verschleißteil- und/oder Ersatzteillieferant angeordnet ist.

14. System (10) nach einem der vorherigen Ansprüche, wobei:
das additiv zu fertigende Bauteil ein Ersatzteil oder ein Verschleißteil einer Behälterbehandlungsanlage zum Behandeln von Behältern ist, vorzugsweise ein Formatteil, ein Behälterführungsgeländer, eine Behälterführung, ein Behälterhalter oder eine Behälterklammer.

15. Computergestütztes Verfahren zum additiven Fertigen eines Bauteils, vorzugsweise einer Behälterbehandlungsanlage, aufweisend:
Bereitstellen einer ersten Recheninfrastruktur (12) mit einem Webserver, der eine Benutzeroberfläche (20) bereitstellt;
Bereitstellen einer zweiten Recheninfrastruktur (14), die mit einer Vielzahl von additiven Fertigungsvorrichtungen (18) mehrerer lokaler Netzwerke (16) zum Betreiben der additiven Fertigungsvorrichtungen (18) verbindbar ist;
Empfangen einer Auswahl eines Bauteils, das mittels der Benutzeroberfläche (20) von einem am Webserver angemeldeten Benutzer ausgewählt wurde, mittels der ersten Recheninfrastruktur (12);
Senden von Anweisungen, die eine additive Fertigungsvorrichtung (18) veranlassen, das ausgewählte Bauteil in einer Vielzahl von Schichten additiv zu fertigen, von der ersten Recheninfrastruktur (12) an die zweite Recheninfrastruktur (14);
Senden eines Fertigeridentifikators, der eine dem angemeldeten Benutzer zugeordnete additive Fertigungsvorrichtung (18) referenziert, von der ersten Recheninfrastruktur (12) an die zweite Recheninfrastruktur (14); und
Empfangen der gesendeten Anweisungen durch die zweite Recheninfrastruktur (14);
Empfangen des gesendeten Fertigeridentifikators durch die zweite Recheninfrastruktur (14); und
Anweisen der in dem empfangenen Fertigeridentifikator referenzierten additiven Fertigungsvorrichtung (18), das ausgewählte Bauteil gemäß den empfangenen Anweisungen additiv zu fertigen, mittels der zweiten Recheninfrastruktur (14).
